# EUROPÄISCHE PATENTSCHRIFT

(11) **EP 2 174 111 B1**
(45) Veröffentlichungstag und Bekanntmachung des Hinweises auf die Patenterteilung: **21.09.2011**
(21) Anmeldenummer: 08773622.9
(22) Anmeldetag: 25.06.2008
(51) Int. Cl.: G01M 15/00

(54) **VERFAHREN UND ANORDNUNG ZUR VOLLAUTOMATISCHEN FUNKTIONSPRÜFUNG VON BRENNKRAFTMASCHINEN**
METHOD AND ARRANGEMENT FOR FULLY AUTOMATIC FUNCTION CHECKING OF INTERNAL COMBUSTION ENGINES
PROCÉDÉ ET DISPOSITIF DE CONTRÔLE DU FONCTIONNEMENT ENTIÈREMENT AUTOMATIQUE DE MOTEURS À COMBUSTION INTERNE

(30) Priorität: 04.07.2007 DE 102007031110
(43) Veröffentlichungstag der Anmeldung: 14.04.2010
(73) Patentinhaber: Audi AG, 85045 Ingolstadt (DE)
(72) Erfinder: KAMM, Stefan, 82467 Garmisch-Partenkirchen (DE); TAPPE, Robert, 85098 Grossmehring (DE); BESTLE, Manuel, 86502 Laugna (DE); HELMCHEN, Mike, 85113 Böhmfeld (DE)
(74) Vertreter: Geissler, Manfred
(86) Internationale Anmeldenummer: PCT/EP2008/005114
(87) Internationale Veröffentlichungsnummer: WO 2009/003617

(56) Entgegenhaltungen:
- WO-A-02/14828
- DE-A1- 4 428 818
- DE-A1- 19 607 461
- DE-A1-102004 045 250

## Beschreibung

Die Erfindung betrifft ein Verfahren und eine Anordnung zur Funktionsprüfung von Brennkraftmaschinen in Kraftfahrzeugen gemäß dem Oberbegriff des Patentanspruches 1 bzw. des Patentanspruches 9.

Ein derartiges Verfahren beschreibt die DE 100 39 965 A1, bei dem ein externes Prüf- und Meßsystem über eine Diagnoseschnittstelle mit einem bordeigenen Diagnose- und Steuerungssystem (OBD) verbunden wird und das Prüfsystem nach Start des Prüfablaufes Steuersignale zur Einstellung von definierten Betriebszuständen der Brennkraftmaschine auslöst, Auswertungen durchführt und dokumentiert. Dieser insbesondere bei der Produktion von Neufahrzeugen eingesetzte Prüfablauf ist dabei weitgehendst automatisiert, wobei ein definierter Warmlauf der Brennkraftmaschine und definierte Motordrehzahlen zur Prüfung z. B. der Abgaswerte und von Funktionsteilen über das Diagnose- und Steuerungssystem (Motorsteuergerät) gesteuert und eingestellt werden.

Der oben beschriebene Prüfablauf erfolgt unter Beachtung notwendiger Sicherheitsanforderungen. Die Einhaltung der Sicherheitsanforderungen wird im Rahmen einer sogenannten "werkergebundenen" Motorprüfung durch einen Werksangehörigen überwacht.

Aus der DE 10 2004 045 250 A1 ist ein Motorprüfstand mit einer Steuereinheit bekannt, die über eine Datenverbindung mit dem Motorsteuergerät eines Kraftfahrzeuges in Verbindung bringbar ist. Das Motorsteuergerät kann bei Erkennen einer vorgegebenen Bedingung ein Abschaltsignal an die Steuereinheit des Motorenprüfstandes ausgeben.

Aufgabe der Erfindung ist es, ein Verfahren oder eine Anordnung vorzuschlagen, das/die zusätzlich den automatisierten Prüfablauf ohne die ständige Mitwirkung eines Werksangehörigen absichert.

Diese Aufgabe wird erfindungsgemäß mit den Merkmalen des Patentanspruches 1 gelöst. Vorteilhafte Weiterbildungen des Verfahrens beinhalten die weiteren Patentansprüche.

Erfindungsgemäß wird vorgeschlagen, dass dem Diagnose- und Steuerungssystem eine Sicherheitsroutine aufgeschaltet wird, die bei Vorliegen bestimmter Signale fahrzeugeigener Steuer- und/oder Betriebseinrichtungen den Prüfablauf unterbricht. Damit soll sichergestellt werden, dass bei dem automatischen Prüfablauf unbeabsichtigte manuelle Eingriffe, insbesondere aber Fehlbedienungen ausgeschlossen sind. Dadurch ist eine "werkerlose" Motorprüfung erreicht, bei der die Einhaltung der Sicherheitsanforderungen automatisiert ohne Bereitstellung eines Werkangehörigen erfolgen kann.

Bevorzugt kann dabei das Diagnose- und Steuerungssystem bei Unterbrechung des Prüfablaufes die Brennkraftmaschine abschalten, um gegebenenfalls drohende Folgeschäden auszuschließen.

In einem Überwachungsschritt wird der Zustand zumindest eines der Bedienungspedale des Kraftfahrzeuges erfasst und bei dessen Betätigung der Prüfablauf abgebrochen. Die Pedale können insbesondere das Gaspedal, gegebenenfalls das Kupplungspedal und/oder das Bremspedal des Kraftfahrzeuges sein. Bevorzugt kann die Betätigung jedes der Bedienungspedale erfasst werden. Alternativ oder zusätzlich kann auch die Betätigung des Gangschalthebels erfasst werden.

Ferner kann die Betriebsstellung des Geschwindigkeits-Wechselgetriebes erfasst und bei Einschalten einer Gangstufe der Prüfablauf abgebrochen werden. Bei einem automatischen Wechselgetriebe mit einem elektronischen Getriebesteuergerät kann dazu in zweckmäßiger Weise das Diagnose- und Steuerungssystem mit dem Getriebesteuergerät kommunizieren.

Des weiteren kann das Diagnose- und Steuerungssystem bei einer Geschwindigkeit V des Kraftfahrzeuges größer als 0 den Prüfablauf abbrechen. Auch dies stellt sicher, dass kein ungewollter, irregulärer Fahrzustand während des automatisch gesteuerten Prüfablaufes auftreten kann.

Dabei kann das Diagnose- und Steuerungssystem Signale von Raddrehzahlsensoren des Kraftfahrzeuges erfassen und bei festgestellter Raddrehzahl > 0 den Prüfablauf abbrechen.

Wenn das Kraftfahrzeug mit einer elektronischen Fahrdynamikregelung und/oder einem Antiblockiersystem ausgestattet ist, so kann in vorteilhafter Weise das Diagnose- und Steuerungssystem mit dem Steuergerät der Fahrdynamikregelung kommunizieren und darüber die Geschwindigkeit V bzw. die Raddrehzahlen erfassen.

Schließlich kann in weiterer Ausgestaltung der Erfindung der über das Prüfsystem gesteuerte Prüfablauf bei Unterbrechung der Kommunikation mit dem bordeigenen Diagnose- und Steuerungssystem abgebrochen werden.

Um eine vollautomatische, sog. "werkerlose" Prüfung zu erreichen, kann mittels der Sicherheitsroutine sowohl eine Pedal- und Gangschalthebelbetätigung erfasst, als auch das oben angegebene Geschwindigkeitssignal erfasst, sowie die Kommunikation zwischen dem Prüfsystem und dem Diagnose- und Steuerungssystem überwacht werden. Bei einer Pedal- und/oder Gangschalthebelbetätigung, einem Geschwindigkeitssignal und/oder einer fehlerhaften Kommunikation wird somit der automatische Prüfablauf sofort unterbrochen.

Zur weiteren Erläuterung des erfindungsgemäßen Verfahrens wird im folgenden auf die Figuren der Zeichnung Bezug genommen.

Es zeigen:

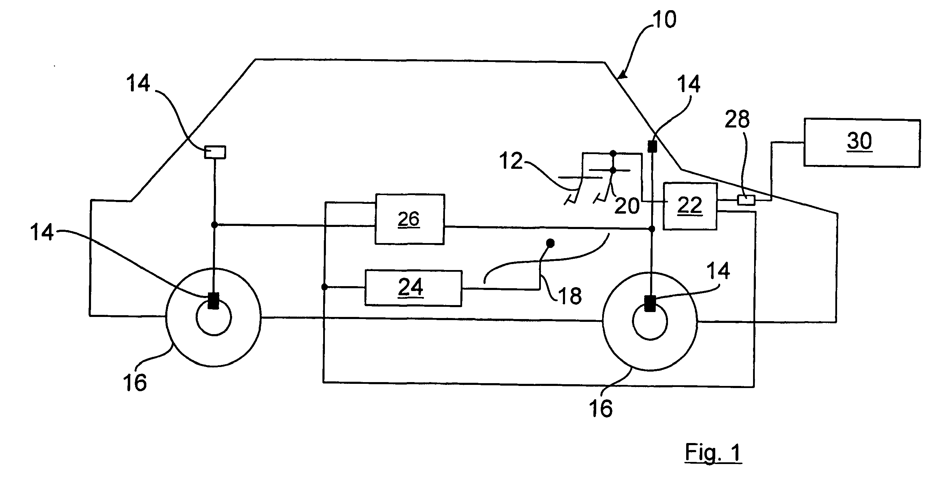

- Fig. 1: als Blockschaltbild ein Kraftfahrzeug mit einem bordeigenen Diagnose- und Steuersystem, das über eine Diagnoseschnittstelle mit einem externen Prüf- und Meßsystem zur Durchführung von Funk- tionsprüfungen verbunden ist; und
- Fig. 2: die Verfahrenschritte zur Durchführung des Prüfablaufes der Funk- tionsprüfung.

Das Kraftfahrzeug 10 ist soweit nicht beschrieben üblicher Bauart mit einer nicht dargestellten Brennkraftmaschine und einem automatischen oder manuellen Geschwindigkeits-Wechselgetriebe, einer hydraulischen Bremseinrichtung u.a. mit einem Bremspedal 12 und Raddrehzahlsensoren 14 an den Rädern 16, sowie einem Wählhebel 18 zur Bedienung des Wechselgetriebes. Ferner ist ein Gaspedal 20 zum willkürlichen Ansteuern der Brennkraftmaschine vorgesehen.

Das Kraftfahrzeug 10 weist ein elektronisches Diagnose- und Steuerungssystem mit einem Steuergerät 22 auf, das mit einer Vielzahl von Sensoren (nicht dargestellt) wie Temperaturgeber, Lambdasonde, Drehzahlsensor, etc. verbunden ist und Aktuatoren wie eine Einspritzsteuerung, Drosselklappensteller, etc. der Brennkraftmaschine entsprechend ansteuert.

Das Steuergerät 22 ist ferner über entsprechende Signalleitungen (ohne Bezugszeichen) mit Signalgebern am Bremspedal 12 und am Gaspedal 20 verbunden.

Des weiteren kommuniziert das Steuergerät 22 gegebenenfalls mit einem elektronischen Steuergerät 24 des automatischen Getriebes und erhält somit Steuersignale über dessen Schaltzustand bzw. über die Stellung des Wählhebels 18 sowie mit einem elektronischen Steuergerät 26 einer Fahrdynamikregelung des Kraftfahrzeuges (z. B. ESP ™) und verarbeitet die Steuersignale der zugehörigen Raddrehzahlsensoren 14, 16 zur Bestimmung der Geschwindigkeit V des Kraftfahrzeuges.

Das Steuergerät 22 des Diagnose- und Steuerungssystems des Kraftfahrzeuges ist über eine Diagnoseschnittstelle 28 mit einem externen Prüf- und Meßsystem 30 verbunden, mittels dem nach der Produktion des Kraftfahrzeuges ein Prüfablauf bzw. eine Funktionsprüfung der Brennkraftmaschine steuerbar, auswertbar und dokumentierbar ist. Das Prüf- und Meßsystem weist z. B. einen Abgastester auf, mit dem Abgaswerte der Brennkraftmaschine bei definierten, vorgeschriebenen Last- und Drehzahlwerten erfasst werden.

Dazu ist in der Software des Steuergerätes 22 ein Softwaremodul hinterlegt, das nach einer definierten Startanforderung über die Diagnosefunktion des Steuergerätes 22 abläuft. Durch das Softwaremodul führt das Steuergerät 22 selbstständig eine Kraftstoffzufuhr zur Drehzahlanhebung durch. Diese dient zunächst zur Konditionierung (Warmlauf) der Brennkraftmaschine und dann zum Ablauf drehzahl- und leistungsabhängiger Diagnosen (z. B. Drallklappensteller im Saugrohr, Lambdasondenprüfung, etc.). Das Softwaremodul steuert weiterhin die automatische Abfrage und den Ablauf einzelner Motordiagnosen.

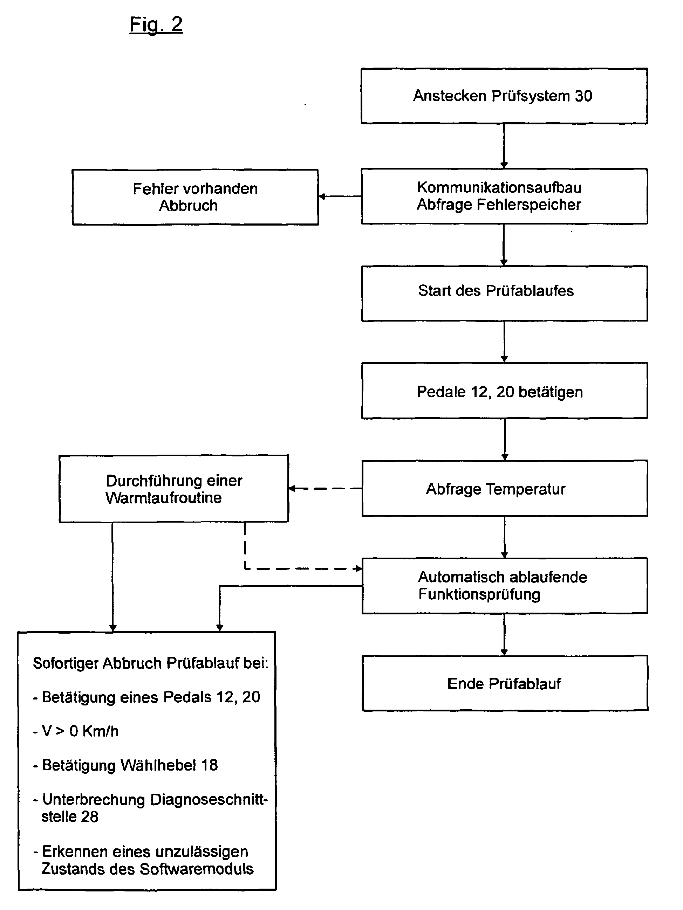

Durch die Implementierung einer Sicherheitsroutine im Steuergerät 22, die durch Informationen aus den kommunizierenden Steuergeräten 24, 26 und den Signalgebern an den Bedienungspedalen 12, 20 gespeist wird, wird der automatische Prüfablauf gemäß nachstehendem Ablaufschema (vgl. Fig. 2) abgesichert:

Zunächst wird das Prüfsystem 30 über die Diagnoseschnittstelle 28 mit dem bordeigenem Diagnose- und Steuerungssystem bzw. dem Steuergerät 22 verbunden und damit ein Kommunikationsaufbau eingeleitet. Im Zuge dessen wird ein Fehlerspeicher des Steuergerätes 22 ausgelesen; ist ein Fehler diagnostiziert, wird der Prüfablauf nicht gestartet bzw. abgebrochen.

Sofern kein Fehler an Sensoren und Aktuatoren des Steuerungssystems erkannt ist, wird als nächster Schritt der Prüfablauf gestartet, wobei zum Start die Bedienungsperson über das Prüfsystem 30 aufgefordert wird, die Pedale 12, 20 zu betätigen. Des weiteren erfolgt eine Abfrage der Temperatur der Brennkraftmaschine. Entspricht diese nicht der vorgegebenen Betriebstemperatur, so wird zunächst eine Warmlaufroutine u.a. mit entsprechender Drehzahlanhebung gesteuert.

Ist die für den Prüfablauf vorgegebene Temperatur der Brennkraftmaschine erreicht bzw. vorhanden, so wird der automatische Prüfablauf bzw. die Funktionsprüfung der Brennkraftmaschine mit über das Prüfsystem 30 vorgegebenen Steuersignalen und über das Steuergerät 22 selbsttätig ausgeführten Drehzahl- und Lastprofilen gestartet und durchgeführt.

Über die im Steuergerät 22 abgelegte Sicherheitsroutine wird jedoch ein sofortiger Abbruch des automatischen Prüfablaufes oder gegebenenfalls der Warmlaufroutine und ein Abschalten der Brennkraftmaschine gesteuert, wenn zumindest eine der nachstehenden Bedingungen vorliegt:
- Wenn über die Raddrehzahlsensoren 14 und das Steuergerät 26 erkannt wird, dass die Geschwindigkeit V > 0 Kmh ist, bzw. das Kraftfahrzeug nicht stillsteht;
- wenn das Bremspedal 12 und/oder das Gaspedal 20 betätigt wird;
- wenn der Wählhebel 18 des automatischen Getriebes aus seiner Neutralstellung oder Parkstellung heraus betätigt wird; oder
- wenn die Kommunikation des Prüfsystems 30 mit dem Steuergerät 22 unterbrochen wird; oder
- wenn ein unzulässiger Zustand des Softwaremoduls der werkerlosen Motorprüfung erkannt wird.

Liegt keine der vorgenannten und die Sicherheit des automatischen Prüfablaufes beeinträchtigende Bedingung vor, so wird nach Beendung des regulären Prüfablaufes das Prüfsystem 30 wieder von der Diagnoseschnittstelle 28 getrennt. Die Auswertungen des Prüfsystems 30 werden mit den Fahrzeugdaten dokumentiert.

Zusätzlich zu den genannten Bedienungspedalen 12, 20 kann z. B. bei einem Schaltgetriebe auch die Betätigung eines Kupplungspedales entsprechend überwacht werden.

## Patentansprüche

1. Verfahren zur Funktionsprüfung von Brennkraftmaschinen in Kraftfahrzeugen, bei dem ein externes Prüf- und Meßsystem (30) über eine Diagnoseschnittstelle (28) mit einem bordeigenen Diagnose- und Steuerungssystem (22) verbunden wird und das Prüfsystem (30) nach Start des Prüfablaufes Steuersignale zur Einstellung von definierten Betriebszuständen der Brennkraftmaschine auslöst, Auswertungen durchführt und dokumentiert, **dadurch gekennzeichnet, dass** dem Diagnose- und Steuerungssystem (22) eine Sicherheitsroutine aufgeschaltet wird, die bei Vorliegen bestimmter Signale fahrzeugeigener Steuer- und/oder Betriebseinrichtungen (24, 26) den automatischen Prüfablauf unterbricht, wobei der Zustand zumindest eines der Bedienungspedale (12, 20) und/oder des Gangschalthebels (18) des Kraftfahrzeuges erfasst und bei dessen Betätigung der Prüfablauf abgebrochen wird.

2. Verfahren nach Anspruch 1, **dadurch gekennzeichnet, dass** bei Unterbrechung des Prüfablaufes die Brennkraftmaschine stillgesetzt wird.

3. Verfahren nach einem der vorhergehenden Ansprüche, **dadurch gekennzeichnet, dass** die Betriebsstellung des Geschwindigkeits-Wechselgetriebes erfasst und bei Einschalten einer Gangstufe der Prüfablauf abgebrochen wird.

4. Verfahren nach Anspruch 3, **dadurch gekennzeichnet, dass** bei einem automatischen Wechselgetriebe mit einem elektronischen Getriebesteuergerät (24) das Diagnose- und Steuerungssystem (22) mit dem Getriebesteuergerät (24) kommuniziert.

5. Verfahren nach einem der vorhergehenden Ansprüche, **dadurch gekennzeichnet, dass** das Diagnose- und Steuerungssystem (22) bei einer Geschwindigkeit V des Kraftfahrzeuges größer als 0 den Prüfablauf abbricht.

6. Verfahren nach Anspruch 5, **dadurch gekennzeichnet, dass** das Diagnose- und Steuerungssystem (22) Signale von Raddrehzahlsensoren (14) des Kraftfahrzeuges erfasst und dass bei festgestellter Raddrehzahl > 0 der Prüfablauf abgebrochen wird.

7. Verfahren nach Anspruch 6, **dadurch gekennzeichnet, dass** das Kraftfahrzeug mit einer elektronischen Fahrdynamikregelung versehen ist und dass das Diagnose- und Steuerungssystem (22) mit dem Steuergerät (26) der Fahrdynamikregelung kommuniziert.

8. Verfahren nach einem oder mehreren der vorhergehenden Ansprüche, **dadurch gekennzeichnet, dass** der Prüfablauf bei Unterbrechung der Kommunikation des bordeigenen Diagnose- und Steuerungssystem (22) mit dem Prüfsystem (30) abgebrochen wird.

9. Anordnung zur Funktionsprüfung von Brennkraftmaschinen in Kraftfahrzeugen, mit einem bordeigenen Diagnose- und Steuerungssystem (22) das über eine Diagnoseschnittstelle (28) mit einem externen Prüf- und Meßsystem (30) verbindbar ist, wobei das Prüfsystem (30) nach Start des Prüfablaufes Steuersignale zur Einstellung von definierten Betriebszuständen der Brennkraftmaschine auslöst, Auswertungen durchführt und dokumentiert, **dadurch gekennzeichnet, dass** das Diagnose-Steuerungssystem (22) eine Sicherheitseinrichtung aufweist, die bei Vorliegen bestimmter Signale fahrzeugeigener Steuer- und/oder Betriebseinrichtungen (24, 26) den automatischen Prüfablauf unterbricht, wobei der Zustand zumindest eines der Bedienungspedale (12, 20) und/oder des Gangschalthebels (18) des Kraftfahrzeuges erfasst und bei dessen Betätigung der Prüfablauf abgebrochen wird.

## Claims

1. Method for function checking of internal combustion engines in motor vehicles, in which an external testing and measuring system (30) is connected via a diagnostic interface (28) to an on-board diagnostic and control system (22), and the testing system (30) triggers, after the start of the test sequence, control signals for setting defined operating states of the internal combustion engine, carries out evaluations and documents them, **characterized in that** a safety routine is imposed on the diagnostic and control system (22), which safety routine interrupts the automatic test sequence when certain signals from vehicle-mounted control and/or operating devices (24, 26) are present, wherein the state of at least one of the operator control pedals (12, 20) and/or of the gearshift lever (18) of the motor vehicle is sensed and the test sequence is aborted when activation of the latter takes place.

2. Method according to Claim 1, **characterized in that** when the test sequence is interrupted the internal combustion engine is deactivated.

3. Method according to one of the preceding claims, **characterized in that** the operating position of the speed-changing gearbox is sensed and the test sequence is aborted when a gear speed is engaged.

4. Method according to Claim 3, **characterized in that** in an automatic change-speed gearbox with an electronic gearbox controller (24) the diagnostic and control system (22) communicates with the gearbox controller (24).

5. Method according to one of the preceding claims, **characterized in that** the diagnostic and control system (22) aborts the test sequence in the event of a velocity V of the vehicle which is greater than 0.

6. Method according to Claim 5, **characterized in that** the diagnostic and control system (22) senses signals from wheel speed sensors (14) of the motor vehicle, and **in that** the test sequence is aborted when a wheel speed > 0 is detected.

7. Method according to Claim 6, **characterized in that** the motor vehicle is provided with an electronic vehicle movement dynamics control system, and **in that** the diagnostic and control system (22) communicates with the controller (26) of the vehicle movement dynamics control system.

8. Method according to one or more of the preceding claims, **characterized in that** the test sequence is aborted when the communication between the on-board diagnostic and control system (22) and the test system (30) is interrupted.

9. Arrangement for function checking of internal combustion engines in motor vehicles, in which an external testing and measuring system (30) is connected via a diagnostic interface (28) to an on-board diagnostic and control system (22), and the testing system (30) triggers, after the start of the test sequence, control signals for setting defined operating states of the internal combustion engine, carries out evaluations and documents them, **characterized in that** the diagnostic and control system (22) has a safety device which interrupts the automatic test sequence when certain signals from vehicle-mounted control and/or operating devices (24, 26) are present, wherein the state of at least one of the operator control pedals (12, 20) and/or of the gearshift lever (18) of the motor vehicle is sensed and the test sequence is aborted when activation of the latter takes place.

## Revendications

1. Procédé de contrôle du fonctionnement de moteurs à combustion interne dans des véhicules automobiles, selon lequel un système de contrôle et de mesure externe (30) est relié avec un système de diagnostic et de contrôle (22) embarqué propre par le biais d'une interface de diagnostic (28) et le système de contrôle (30) délivre, après le début du déroulement du contrôle, des signaux de commande destinés à régler des états opérationnels définis du moteur à combustion interne, effectue des interprétations et les documente, **caractérisé en ce qu'**une routine de sécurité est connectée au système de diagnostic et de contrôle (22), laquelle interrompt le déroulement automatique du contrôle en présence de certains signaux des équipements de contrôle et/ou de commande (24, 26) propres au véhicule, l'état d'au moins l'une des pédales de commande (12, 20) et/ou du levier de changement de rapport (18) du véhicule automobile étant détecté et le déroulement du contrôle étant interrompu en cas d'actionnement de celui-ci.

2. Procédé selon la revendication 1, **caractérisé en ce que** le moteur à combustion interne est immobilisé en cas d'interruption du déroulement du contrôle.

3. Procédé selon l'une des revendications précédentes, **caractérisé en ce que** la position opérationnelle de l'engrenage de changement de vitesse est détectée et le déroulement du contrôle est interrompu lors de l'engagement d'un rapport.

4. Procédé selon la revendication 3, **caractérisé en ce que** dans le cas d'une boîte de vitesses automatique munie d'un contrôleur de boîte de vitesses (24) électronique, le système de diagnostic et de contrôle (22) communique avec le contrôleur de boîte de vitesses (24).

5. Procédé selon l'une des revendications précédentes, **caractérisé en ce que** le système de diagnostic et de contrôle (22) interrompt le déroulement du contrôle en présence d'une vitesse V du véhicule automobile supérieure à 0.

6. Procédé selon la revendication 5, **caractérisé en ce que** le système de diagnostic et de contrôle (22) détecte des signaux de capteurs de vitesse de rotation des roues (14) du véhicule automobile et **en ce que** le déroulement du contrôle est interrompu lorsqu'il est constaté que la vitesse de rotation des roues est > 0.

7. Procédé selon la revendication 6, **caractérisé en ce que** le véhicule automobile est doté d'une régulation électronique de la dynamique de conduite et **en ce que** le système de diagnostic et de contrôle (22) communique avec le contrôleur (26) de la régulation de la dynamique de conduite.

8. Procédé selon une ou plusieurs des revendications précédentes, **caractérisé en ce que** le déroulement du contrôle est interrompu en cas d'interruption de la communication entre le système de diagnostic et de contrôle (22) embarqué propre et le système de contrôle (30).

9. Arrangement de contrôle du fonctionnement de moteurs à combustion interne dans des véhicules automobiles, comprenant un système de diagnostic et de contrôle (22) embarqué propre qui peut être relié avec un système de contrôle et de mesure externe (30) par le biais d'une interface de diagnostic (28), le système de contrôle (30) délivrant, après le début du déroulement du contrôle, des signaux de commande destinés à régler des états opérationnels définis du moteur à combustion interne, effectue des interprétations et les documente, **caractérisé en ce que** le système de diagnostic et de contrôle (22) présente un équipement de sécurité, lequel interrompt le déroulement automatique du contrôle en présence de certains signaux des équipements de contrôle et/ou de commande (24, 26) propres au véhicule, l'état d'au moins l'une des pédales de commande (12, 20) et/ou du levier de changement de rapport (18) du véhicule automobile étant détecté et le déroulement du contrôle étant interrompu en cas d'actionnement de celui-ci.
